# EUROPEAN PATENT SPECIFICATION

(11) **EP 4 036 017 B1**
(45) Date of publication and mention of the grant of the patent: **11.12.2024**
(21) Application number: 22151188.4
(22) Date of filing: 12.01.2022
(51) Int. Cl.: G05D 1/00, G08G 5/02, B64U 70/97, G08G 5/00

(54) **MARKER BASED SMART LANDING PAD**
MARKER-BASIERTER INTELLIGENTER LANDEPLATZ
PLATE-FORME D'ATTERRISSAGE INTELLIGENTE BASÉE SUR DES MARQUEURS

(30) Priority: 01.02.2021 IN 202111004297; 25.03.2021 US 202117212685
(43) Date of publication of application: 03.08.2022
(73) Proprietor: Honeywell International Inc., Charlotte, NC 28202 (US)
(72) Inventor: PHAM, Hai, Charlotte, 28202 (US); JYOTHIKUMAR, Arjun Bindu, Charlotte, 28202 (US); EDARA, Thandava Krishna, Charlotte, 28202 (US); PARDOE, Nikolas, Charlotte, 28202 (US); FLEISHMAN, Samuel Elliott, Charlotte, 28202 (US); BANGURA, Moses, Charlotte, 28202 (US); JACOB, Mohan Pulikkottil, Charlotte, 28202 (US); JAHAGIRDAR, Manik, Charlotte, 28202 (US); VENKATARAMAN, Vijay, Charlotte, 28202 (US); SRIVASTAVA, Romi, Charlotte, 28202 (US)
(74) Representative: Haseltine Lake Kempner LLP

(56) References cited:
- WO-A1-2018/201704
- US-A1- 2016 122 038
- US-A1- 2017 015 438
- US-A1- 2018 053 139
- US-A1- 2018 265 196
- US-B1- 10 395 544
- US-B2- 10 713 958

## Description

### CROSS REFERENCE TO RELATED APPLICATION

This application claims the benefit of priority to Indian Application No. 202111004297, filed on February 1, 2021.

### BACKGROUND

The drone industry is rapidly growing, and drones such as urban air mobility (UAM) vehicles, unmanned aircraft systems (UAS), and other unmanned aerial vehicles (UAVs), have a need for technological improvements that provide for safe landings in case of an emergency.

In some cases, marker based landing (MBL) systems and pads are being used by various companies for drone deliveries. However, when these marker based landing systems and pads are used for emergency landings, the landing pad can be unrecognizable from the drone camera when it is dark, under shadow, or when the light is too bright. US 2018/0053139 discloses systems, methods and apparatuses for managing aerial drone parcel transfers.

### SUMMARY

According to this disclosure there is provided a smart landing pad and method as recited by claims 1 and 7. A smart landing pad comprises a flexible display including a display surface configured to show one or more images or patterns, and a protective layer over the display surface. The protective layer is configured to allow an unmanned aerial vehicle (UAV) to land on the smart landing pad without damaging the flexible display. One or more locator and range finder devices are operatively coupled to the flexible display and are operative to communicate with the UAV, such that the flexible display is self-locatable based on a three-dimensional location communicated to the UAV during a landing approach. One or more communication devices are operatively coupled to the flexible display and are operative for wireless communications with a computer or mobile computational device that is operative to provide on-demand user functions, which allow for dynamically changing or customizing in real time the one or more images or patterns that are shown on the display surface.

The one or more images or patterns comprise a background area configurable to show changeable images that match an environment where the smart landing pad is placed for use as a landing site for the UAV, and a target landing area that is surrounded by the background area. The target landing area includes: a changeable insensitive, contrast portion that allows the target landing area to be more recognizable from the UAV under bright light, in darkness at nighttime, or due to poor visibility from inclement weather or dusty environmental conditions; and one or more changeable marker pattern portions having changeable colors and/or shapes that provide for ease of pattern recognition from the UAV. The one or more images also include one or more changeable quick response (QR) codes on the target landing area, with the one or more QR codes operative as fiducial points or for communications. The flexible display is Internet of things (IoT) enabled so that data from the smart landing pad is remotely cloud accessible, allowing the data to be changed, logged, or processed.

### BRIEF DESCRIPTION OF THE DRAWINGS

Features of the present disclosure will be apparent to those skilled in the art from the following description with reference to the drawings. Understanding that the drawings depict only typical embodiments and are not therefore to be considered limiting in scope, the embodiments will be described with additional specificity and detail through the use of the drawings, in which:
Figure 1 illustrates a marker based smart landing pad, according to one embodiment;
Figure 2 illustrates an exemplary system implementation for a marker based smart landing pad; and
Figure 3 is a flow diagram for a method of using a marker based smart landing pad.

### DETAILED DESCRIPTION

In the following detailed description, reference is made to the accompanying drawings, in which is shown by way of illustration various exemplary embodiments. It is to be understood that other embodiments may be utilized. The following detailed description is, therefore, not to be taken in a limiting sense.

A marker based, smart landing pad system and method are described herein. The smart landing pad system is useful for the landing of an unmanned aerial vehicle (UAV), including various drones, such as urban air mobility (UAM) vehicles, unmanned aircraft systems (UAS), and the like.

In one embodiment, a smart landing pad for marker based landing of a UAV includes a flexible display, which is drivable by a computer or mobile computational device in operative communication with the flexible display through one or more communication devices operatively coupled to the flexible display. This provides for on demand user functions, which allow for dynamically changing or customizing in real time what is shown on the flexible display. For example, a user can provide on demand changes to various images or patterns shown on the flexible display, such as quick response (QR) codes, landing surface properties, as well as display intensity according to the exposure setting of UAV onboard cameras, and a backlighted display screen so the UAV can recognize the smart landing pad at nighttime. The QR codes are on demand changeable for fiducial-based navigation and communication purposes.

In addition, one or more locator and range finder devices are operatively coupled to the flexible display and are configured to communicate with a UAV, such that the flexible display is self-locatable based on a three-dimensional location communicated to the UAV during a landing approach. For example, a laser range finder embedded in the flexible display can be used to detect latitude/longitude/altitude (LLA), angle, and distance from the smart landing pad to the UAV. The distance can be used as an altitude from the UAV to the landing surface, and data from the laser range finder can be relayed to the UAV via a long range (LoRa) radio coupled to the flexible display.

The smart landing pad can also be Internet of Things (IoT) enabled, such that data from the smart landing pad is remotely cloud accessible by a user. For example, the flexible display can be embedded with a cloud connection such that the smart landing pad is IoT enabled. This allows a user to remotely monitor or control the functions of the smart landing pad over the cloud connection.

Further details of various embodiments are described hereafter with reference to the drawings.

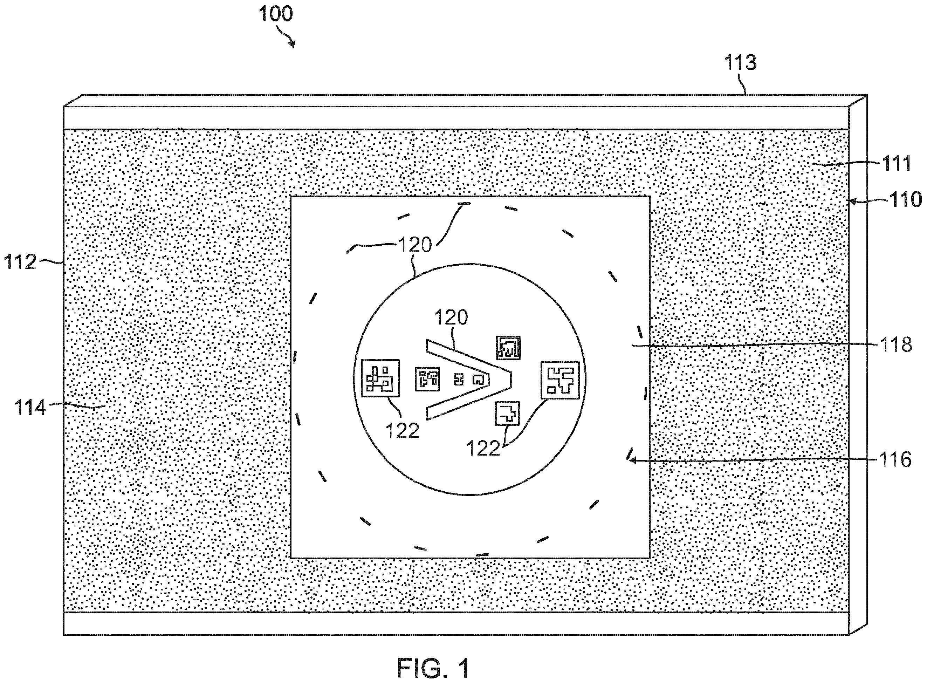

Figure 1 illustrates a marker based smart landing pad 100, according to one embodiment. The smart landing pad 100 includes a flexible display 110 having a display surface 111 (screen) configured to show one or more images or patterns. A protective layer 112 is formed over display surface 111. In addition, flexible display 110 can be mounted on a flexible backing layer 113.

In example embodiments, flexible display 110 can be rollable, conformable, foldable, or shapeable. For example, flexible display 110 can be a flexible organic liquid crystal display (OLCD) display, a flexible organic light emitting diode (OLED) display, or the like.

The protective top surface 112 can be a layer of coated hard material, such as a layer of tempered glass or an acrylic sheet (e.g., plexiglass). The protective top surface 112 allows a UAV to safely land on smart landing pad 100 without damaging flexible display 100. The protective top surface 112 is also configured to be water and dust resistant.

The flexible backing layer 113 can be composed of flexible polymer material, for example. The flexible backing layer 113 provides protection for flexible display 110 when placed on the ground where a UAV is to land.

The smart landing pad 100 is configured to allow for on demand changes to what is shown on flexible display 110. For example, flexible display 110 has a changeable background area 114 that is configured to show various background images. These images can be tailored to match the actual environment where smart landing pad 100 is placed for use as a landing site for a UAV. Nonlimiting examples of images that can be shown in background area 114 include images of sand, gravel, loose rock, grasses, concrete, or the like.

The flexible display 110 also has a target landing area 116 that is surrounded by background area 114. The target landing area 116 has a changeable insensitive, contrast portion 118 that makes target landing area 116 more recognizable from the UAV under bright light, in the dark at nighttime, or due to poor visibility from inclement weather or dusty environmental conditions.

The target landing area 116 also has changeable marker pattern portions 120, whose color and/or shape can be changed to provide for ease of object/pattern recognition from the UAV. For example, while target area 116 is shown with circular marker boundary lines (solid and dashed) and a central target marker ("V" shape), these can be changed to other geometric shapes or patterns as desired. The target landing area 116 also is configured to display one or more changeable quick response (QR) codes 122, which serve as fiducial points or for communication purposes.

The smart landing pad 100 can also include one or wireless communication devices, which provide short range and/or cloud communications with a computer or mobile computational device. This allows for on-demand user functions, which allow for dynamically changing or customizing in real time what is shown on flexible display 110. The smart landing pad can also include one or more locator, range finder, and long range communication devices, which operatively communicate with a UAV for landing purposes. Examples of such devices are described in further detail hereafter.

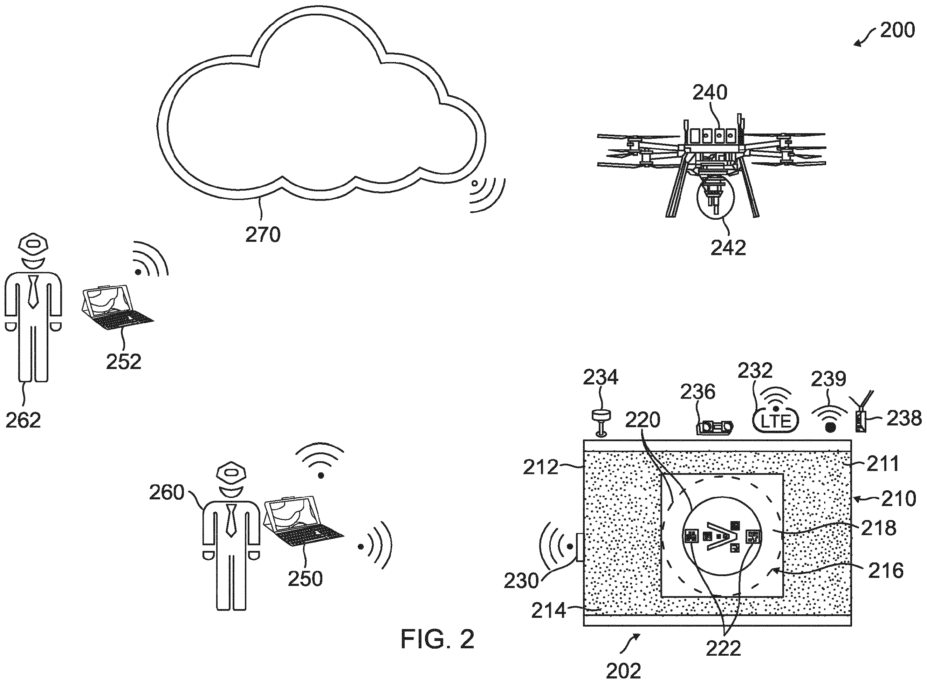

Figure 2 illustrates an exemplary system 200 for implementing use of a marker based smart landing pad 202, which includes features similar to those described above for smart landing pad 100. Accordingly, smart landing pad 202 includes a flexible display 210 having a display surface 211 configured to show one or more images or patterns. A protective layer 212 is formed over display surface 211. In addition, flexible display 210 can be mounted on a flexible backing layer.

The flexible display 210 can be rollable, conformable, foldable, or shapeable. For example, flexible display 210 can be a flexible OLCD display, a flexible OLED display, or the like. The protective layer 212 can be a layer of coated hard material, and is configured such that a UAV 240 is able to safely land on smart landing pad 202 without damaging flexible display 210.

The smart landing pad 202 is configured to allow for on demand changes to what is shown on flexible display 210. For example, flexible display 210 has a changeable background area 214 that is configured to show various background images, which can be tailored to match the actual environment where smart landing pad 202 is placed for use as a landing site for UAV 240. The flexible display 210 also has a target landing area 216 that is surrounded by background area 214. The target landing area 216 has a changeable insensitive, contrast portion 218 that makes target landing area 216 more recognizable from UAV 240 under bright light or in the dark at nighttime.

The target landing area 216 also has changeable marker pattern portions 220, whose color and/or shape can be changed to provide for ease of object/pattern recognition from UAV 240. The target landing area 216 also is configured to display one or more changeable QR codes 222, which serve as fiducial points or for communication purposes. For example, QR codes 222 can have special meanings that are defined by the operation, such as suggested UAV camera exposure settings, slope of the landing surface, condition of the landing surface, type of landing surface, good to land, abort landing process, or the like.

The smart landing pad 202 also includes one or wireless communication devices, which provide for short range and/or cloud communications with a computer or mobile computational device operated by a user. For example, flexible display 210 can be embedded with a short range device 230, which provides for short range communications (e.g., WiFi, Bluetooth) with a computer 250 such as a laptop, or with a mobile computational device such as a smartphone, operated by a user 260. The computer 250 (or mobile computational device) is operative to provide on demand user functions, which allow user 260 to dynamically change or customize in real time what is shown on flexible display 210.

In addition, flexible display 210 can be Internet of Things (IoT) enabled, such that data from smart landing pad 202 is remotely cloud accessible. This allows smart landing pad 202 to be remotely monitored or controlled over a cloud connection. For example, a remote cloud server can be used to log and store landing data for auditing purposes or future data analysis. In addition, the cloud connection can be used to provide weather condition data, wind speed data, and the like to the descending UAV through communications with the smart landing pad, as well as go/no go decisions for landing the UAV.

In one embodiment, a Long Term Evolution (LTE) cloud connection 232 can be embedded in flexible display 210 to IoT enable smart landing pad 202. This allows data to be changed, logged, or processed, such as from a remote location. For example, a remote user 262 in a supervisory capacity can manually override a landing situation for smart landing pad 202 using a computer 252 (or mobile computational device) over a cloud connection 270.

The smart landing pad 202 also includes one or more locator, range finder, and long range communication devices, which operatively communicate with UAV 240 for landing purposes. These devices allow smart landing pad 202 to be self-locatable based on a three-dimensional location communicated to UAV 240, so that UAV 240 can successfully land on target landing area 216.

For example, flexible display 210 can have an embedded a Global Navigation Satellite System (GNSS) device, such as a Global Positioning System (GPS) device 234 or other locator device, which provides latitude/longitude/altitude (LLA) data for self-locating purposes. The flexible display 210 can also have an embedded laser range finder 236 to detect the proximity of UAV 240 during its descent toward smart landing pad 202.

In addition, a long range (LoRa) communication and ranging device 238 can be embedded in flexible display 210 to provide distance measurements to determine the proximity and altitude from UAV 240 to smart landing pad 202. The LoRa is a low-power wide-area network (LPWAN) protocol, which can be implemented with LoRa enabled devices. For example, a LoRa radio with a ranging engine can be used as a distance finder. The distances measured by the range finders are used by the UAV to confirm accuracy for landing purposes.

A proprietary data communication channel 239 can be provided that relays the location data of smart landing pad 202 to UAV 240. The location data can be used to provide the coordinates for landing of UAV 240 on smart landing pad 202.

The UAV 240 includes a sensor payload 242, which allows UAV 240 to track and communicate with smart landing pad 202. For example, sensor payload 242 can include image capturing devices (cameras), a laser range sensor, a proximity sensor, a LoRa and time of flight (ToF) range sensing device, and the like.

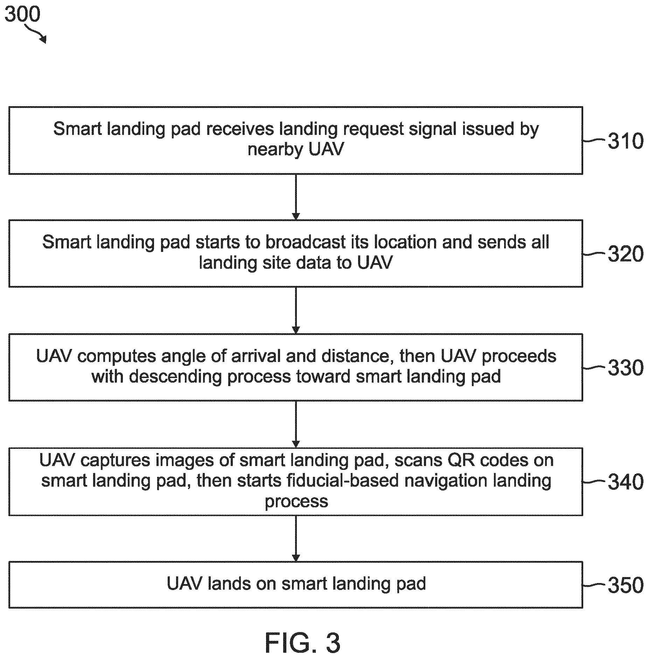

Figure 3 is a flow diagram for a method 300 of using a marker based smart landing pad, such as those described above. Initially, a smart landing pad, placed at a given location, receives a landing request signal issued by a nearby UAV (block 310). The smart landing pad then starts to broadcast its location and send all landing site data to the UAV (block 320). The UAV computes the angle of arrival and distance to the smart landing pad, based on the received landing site location and data, and the UAV then proceeds with the descending process toward the smart landing pad (block 330). The UAV captures images of the smart landing pad, scans QR codes shown on the display surface of the smart landing pad, and then starts a fiducial-based navigation landing process (block 340). The UAV then lands on the smart landing pad (block 350).

A computer or processor used in the present systems and methods can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present systems and methods.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact discs, DVDs, Blu-ray discs, or other optical storage media; volatile or nonvolatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

From the foregoing, it will be appreciated that, although specific embodiments have been described herein for purposes of illustration, various modifications may be made without deviating from the scope of the invention, as defined by the claims.

Thus, the described embodiments are to be considered in all respects only as illustrative and not restrictive.

## Claims

1. A smart landing pad (100), comprising:
a flexible display (110) including a display surface (111) configured to show one or more images or patterns;
a protective layer (112) over the display surface, wherein the protective layer is configured to allow an unmanned aerial vehicle (UAV) (240) to land on the smart landing pad without damaging the flexible display;
one or more locator and range finder devices (234, 236) operatively coupled to the flexible display and operative to communicate with the UAV, such that the flexible display is self-locatable based on a three-dimensional location communicated to the UAV during a landing approach; and
one or more communication devices (230, 232) operatively coupled to the flexible display and operative for wireless communications with a computer or mobile computational device (250, 252) that is operative to provide on-demand user functions, which allow for dynamically changing or customizing in real time the one or more images or patterns that are shown on the display surface;
wherein the one or more images or patterns comprise:
a background area (114) configurable to show changeable images that match an environment where the smart landing pad is placed for use as a landing site for the UAV;
a target landing area (116) that is surrounded by the background area, the target landing area including:
a changeable insensitive (118), contrast portion that allows the target landing area to be more recognizable from the UAV under bright light, in darkness at nighttime, or due to poor visibility from inclement weather or dusty environmental conditions; and
one or more changeable marker pattern portions (120) having changeable colors and/or shapes that provide for ease of pattern recognition from the UAV; and
one or more changeable quick response (QR) codes (122) on the target landing area, the one or more QR codes operative as fiducial points or for communications;
wherein the flexible display is Internet of things (IoT) enabled so that data from the smart landing pad is remotely cloud accessible, allowing the data to be changed, logged, or processed.

2. The smart landing pad (100) of claim 1, wherein the flexible display (110) is rollable, conformable, foldable, or shapeable.

3. The smart landing pad (100) of claim 1, wherein the flexible display (110) comprises a flexible organic liquid crystal display (OLCD) display, or a flexible organic light emitting diode (OLED) display.

4. The smart landing pad (100) of claim 1, wherein the protective layer (112) comprises a coated hard material.

5. The smart landing pad (100) of claim 1, wherein the one or more locator and range finder devices are embedded in the flexible display and comprise:
a Global Navigation Satellite System (GNSS) device (234) operative to provide latitude/longitude/altitude (LLA) data for the flexible display when placed at a landing site;
a laser range finder (236) operative to detect a proximity of the UAV with respect to the flexible display during a descent of the UAV toward the landing site; and
a long range (LoRa) communication and ranging device (238) embedded in the flexible display and operative to provide distance measurements to determine a proximity and altitude from the UAV to the flexible display during a descent of the UAV toward the landing site.

6. The smart landing pad (100) of claim 1, wherein the one or more communication devices (232, 239) are embedded in the flexible display (110) and comprise:
a short range device (230) configured to provide a WiFi connection or a Bluetooth connection; and
a cloud connection device (232) configured to provide a Long Term Evolution (LTE) cloud connection.

7. A method (300) comprising:
placing the smart landing pad (100) of claim 1 at a landing site location for an unmanned aerial vehicle (UAV) (240);
receiving, at the smart landing pad, a landing request signal issued by the UAV;
broadcasting the landing site location and data from the smart landing pad to the UAV;
computing, in the UAV, an angle of arrival and distance to the smart landing pad based on the landing site location and data; and
initiating a descent process of the UAV toward the smart landing pad during which the UAV captures images of the smart landing pad, scans quick response (QR) codes (122) shown on the display surface, and begins a fiducial-based navigation landing process for landing the UAV on the smart landing pad.

8. The method (300) of claim 7, wherein the UAV includes a sensor payload (242) configured to allow the UAV (240) to track and communicate with the smart landing pad (100).

9. The method (300) of claim 8, wherein the sensor payload (242) comprises one or more of an image capturing device, a laser range sensor, a proximity sensor, or a long range (LoRa) and time of flight (ToF) range sensing device.

10. The method (300) of claim 7, wherein a proprietary data communication channel (239) broadcasts the landing site location and data from the smart landing pad (100) to the UAV (240).

## Patentansprüche

1. Intelligenter Landeplatz (100), umfassend:
eine flexible Anzeige (110), beinhaltend eine Anzeigeoberfläche (111), die dazu konfiguriert ist, ein oder mehrere Bilder oder Muster zu zeigen;
eine Schutzschicht (112) über der Anzeigeoberfläche, wobei die Schutzschicht dazu konfiguriert ist, es einem unbemannten Fluggerät (Drohne) (240) zu ermöglichen, auf dem intelligenten Landeplatz zu landen, ohne die flexible Anzeige zu beschädigen;
eine oder mehrere Ortungs- und Entfernungsmessvorrichtungen (234, 236), die operativ mit der flexiblen Anzeige gekoppelt sind und dazu dienen, mit der Drohne zu kommunizieren, so dass die flexible Anzeige basierend auf einem dreidimensionalen, während eines Sinkflugs an die Drohne kommunizierten Standort selbstortbar ist; und
eine oder mehrere Kommunikationsvorrichtungen (230, 232), die operativ mit der flexiblen Anzeige gekoppelt sind und der drahtlosen Kommunikation mit einer Computer- oder mobilen Rechenvorrichtung (250, 252) dienen, die dazu dient, bei Bedarf Nutzerfunktionen bereitzustellen, die es ermöglichen, das eine oder die mehreren Bilder oder Muster, die auf der Anzeigeoberfläche gezeigt werden, in Echtzeit dynamisch zu ändern oder anzupassen;
wobei das eine oder die mehreren Bilder oder Muster Folgendes umfassen:
einen Hintergrundbereich (114), der konfigurierbar ist, um veränderbare Bilder anzuzeigen, die mit einer Umgebung übereinstimmen, in welcher der intelligente Landeplatz zur Verwendung als Landestelle für die Drohne platziert wird;
einen Ziellandebereich (116), der von dem Hintergrundbereich umgeben wird, wobei der Ziellandebereich Folgendes beinhaltet:
einen veränderbaren, unempfindlichen (118) Kontrastbereich, der es ermöglicht, dass der Ziellandebereich von der Drohne aus bei hellem Licht, in der Dunkelheit bei Nacht, oder aufgrund schlechter Sicht durch Schlechtwetter oder staubige Umgebungsbedingungen besser erkennbar ist; und
einen oder mehrere veränderbare Markierungsmusterabschnitte (120) mit veränderbaren Farben und/oder Formen, die eine Erleichterung der Mustererkennung von der Drohne aus bereitstellen; und
einen oder mehrere veränderbare Quick-Response- (QR-) Codes (122) auf dem Ziellandebereich, wobei der eine oder die mehreren QR-Codes als Referenzpunkte oder zur Kommunikation dienen;
wobei die flexible Anzeige Internet-of-Things-(loT)-fähig ist, so dass auf Daten von dem intelligenten Landeplatz remote über eine Cloud zugegriffen werden kann, wodurch ermöglicht wird, dass die Daten verändert, protokolliert oder verarbeitet werden.

2. Intelligenter Landeplatz (100) nach Anspruch 1, wobei die flexible Anzeige (110) rollbar, anpassbar, faltbar oder formbar ist.

3. Intelligenter Landeplatz (100) nach Anspruch 1, wobei die flexible Anzeige (110) eine flexible organische Flüssigkristall-(OLCD)-Anzeige oder eine flexible organische Leuchtdioden-(OLED)-Anzeige umfasst.

4. Intelligenter Landeplatz (100) nach Anspruch 1, wobei die Schutzschicht (112) ein beschichtetes hartes Material umfasst.

5. Intelligenter Landeplatz (100) nach Anspruch 1, wobei die eine oder mehreren Ortungs- und Entfernungsmessvorrichtungen in der flexiblen Anzeige eingegliedert sind und Folgendes umfassen:
eine globale Navigationssatellitensystem-(GNSS)-Vorrichtung (234), die dazu dient, Längen-/Breiten-/Höhen-(LLA)-Daten für die flexible Anzeige bereitzustellen, wenn sie an einer Landestelle platziert wird;
einen Laserentfernungsmesser (236), der dazu dient, während eines Sinkflugs der Drohne in Richtung der Landestelle die Nähe der Drohne in Bezug auf die flexible Anzeige zu erkennen; und
eine Langstrecken-(LoRa)-Kommunikations- und Navigationsvorrichtung (238), die in der flexiblen Anzeige eingegliedert ist und dazu dient, Entfernungsmessungen bereitzustellen, um während eines Sinkflugs der Drohne in Richtung der Landestelle eine Nähe und Höhe von der Drohne zur flexiblen Anzeige zu bestimmen.

6. Intelligenter Landeplatz (100) nach Anspruch 1, wobei die eine oder mehreren Kommunikationsvorrichtungen (232, 239) in der flexiblen Anzeige (110) eingegliedert sind und Folgendes umfassen:
eine Kurzstreckenvorrichtung (230), die dazu konfiguriert ist, eine WiFi-Verbindung oder eine Bluetooth-Verbindung bereitzustellen; und
eine Cloudverbindungsvorrichtung (232), die dazu konfiguriert ist, eine Long-Term-Evolution-(LTE)-Cloudverbindung bereitzustellen.

7. Verfahren (300), umfassend:
Platzieren des intelligenten Landeplatzes (100) nach Anspruch 1 an einer Position der Landestelle für ein unbemanntes Fluggerät (Drohne) (240);
Empfangen, an dem intelligenten Landeplatz, eines von der Drohne ausgegebenen Landeanfragesignals;
Übertragen der Position und der Daten der Landestelle von dem intelligenten Landeplatz an die Drohne;
Berechnen, in der Drohne, eines Ankunftswinkels und eines Abstands von dem intelligenten Landeplatz basierend auf der Position und den Daten der Landestelle; und
Initiieren eines Sinkflugvorgangs der Drohne in Richtung des intelligenten Landeplatzes, während dessen die Drohne Bilder des intelligenten Landeplatzes aufnimmt, auf der Anzeigeoberfläche gezeigte Quick-Response-(QR)-Codes (122) scannt und einen Landeprozess der referenzbasierten Navigation zum Landen der Drohne auf dem intelligenten Landeplatz beginnt.

8. Verfahren (300) nach Anspruch 7, wobei die Drohne eine Sensornutzlast (242) beinhaltet, die dazu konfiguriert ist, es der Drohne (240) zu ermöglichen, den intelligenten Landeplatz (100) zu tracken und mit ihm zu kommunizieren.

9. Verfahren (300) nach Anspruch 8, wobei die Sensornutzlast (242) eine/s oder mehrere der Folgenden umfasst: eine Bildaufnahmevorrichtung, einen Laserentfernungssensor, einen Näherungssensor oder eine Langstrecken-(LoRa)- und Flugzeit-(ToF)-Entfernungserfassungsvorrichtung.

10. Verfahren (300) nach Anspruch 7, wobei ein eigener Datenkommunikationskanal (239) die Position der Landestelle und Daten von dem intelligenten Landeplatz (100) an die Drohne (240) überträgt.

## Revendications

1. Plate-forme d'atterrissage intelligente (100), comprenant :
un affichage flexible (110) comprenant une surface d'affichage (111) configurée pour montrer un ou plusieurs images ou motifs ;
une couche protectrice (112) sur la surface d'affichage, dans laquelle la couche protectrice est configurée pour permettre à un véhicule aérien sans pilote (UAV) (240) d'atterrir sur la plate-forme d'atterrissage intelligente sans endommager l'affichage flexible ;
un ou plusieurs dispositifs de localisation et de télémétrie (234, 236) couplés fonctionnellement à l'affichage flexible et fonctionnels pour communiquer avec le véhicule aérien sans pilote, de telle sorte que l'affichage flexible est auto-localisable sur la base d'un emplacement tridimensionnel communiqué au véhicule aérien sans pilote pendant une approche d'atterrissage ; et
un ou plusieurs dispositifs de communication (230, 232) couplés fonctionnellement à l'affichage flexible et fonctionnels pour des communications sans fil avec un ordinateur ou un dispositif informatique mobile (250, 252) qui est fonctionnel pour fournir des fonctions d'utilisateur à la demande permettant de modifier ou de personnaliser dynamiquement en temps réel lesdits un ou plusieurs images ou motifs qui sont montrés sur la surface d'affichage ;
dans lequel lesdits un ou plusieurs images ou motifs comprennent :
une zone d'arrière-plan (114) configurable pour montrer des images changeantes qui correspondent à un environnement où la plate-forme d'atterrissage intelligente est placée pour être utilisée comme site d'atterrissage pour le véhicule aérien sans pilote ;
une zone d'atterrissage cible (116) qui est entourée par la zone d'arrière-plan, la zone d'atterrissage cible comprenant :
une portion de contraste insensible changeante (118) qui permet à la zone d'atterrissage cible d'être plus reconnaissable depuis le véhicule aérien sans pilote sous une lumière vive, dans l'obscurité la nuit, ou par mauvaise visibilité du fait de mauvaises conditions météorologiques ou de conditions environnementales poussiéreuses ; et
une ou plusieurs portions de motif de marquage changeantes (120) ayant des couleurs et/ou des formes changeantes qui facilitent une reconnaissance de motif à partir du véhicule aérien sans pilote ; et
un ou plusieurs codes de réponse rapide (QR) changeants (122) sur la zone d'atterrissage cible, lesdits un ou plusieurs codes QR fonctionnant comme des points de repère ou pour les communications ;
dans lequel l'affichage flexible est compatible avec l'Internet des objets (loT) de telle sorte que les données de la plate-forme d'atterrissage intelligente sont accessibles en nuage à distance, ce qui permet de modifier, d'enregistrer ou de traiter les données.

2. Plate-forme d'atterrissage intelligente (100) selon la revendication 1, dans laquelle l'affichage flexible (110) est enroulable, conformable, pliable ou façonnable.

3. Plate-forme d'atterrissage intelligente (100) selon la revendication 1, dans laquelle l'affichage flexible (110) comprend un affichage flexible à cristaux liquides organiques (OLCD) ou un affichage flexible à diodes électroluminescentes organiques (OLED).

4. Plate-forme d'atterrissage intelligente (100) selon la revendication 1, dans laquelle la couche protectrice (112) comprend un matériau dur revêtu.

5. Plate-forme d'atterrissage intelligente (100) selon la revendication 1, dans laquelle lesdits un ou plusieurs dispositifs de localisation et de télémétrie sont intégrés dans l'affichage flexible et comprennent :
un dispositif de système de positionnement par satellites (GNSS) (234) fonctionnel pour fournir des données de latitude/longitude/altitude (LLA) pour l'affichage flexible quand il est placé sur un site d'atterrissage ;
un télémètre laser (236) fonctionnel pour détecter la proximité du véhicule aérien sans pilote par rapport à l'affichage flexible lors d'une descente du véhicule aérien sans pilote vers le site d'atterrissage ; et
un dispositif de communication et de télémétrie à longue portée (LoRa) (238) intégré dans l'affichage flexible et fonctionnel pour fournir des mesures de distance afin de déterminer la proximité et l'altitude entre le véhicule aérien sans pilote et l'affichage flexible lors d'une descente du véhicule aérien sans pilote vers le site d'atterrissage.

6. Plate-forme d'atterrissage intelligente (100) selon la revendication 1, dans laquelle lesdits un ou plusieurs dispositifs de communication (232, 239) sont intégrés dans l'affichage flexible (110) et comprennent :
un dispositif à courte portée (230) configuré pour fournir une connexion WiFi ou une connexion Bluetooth ; et
un dispositif de connexion en nuage (232) configuré pour fournir une connexion en nuage Long Term Evolution (LTE).

7. Procédé (300) comprenant :
le placement de la plate-forme d'atterrissage intelligente (100) selon la revendication 1 à un emplacement de site d'atterrissage pour un véhicule aérien sans pilote (UAV) (240) ;
la réception, sur la plate-forme d'atterrissage intelligente, d'un signal de demande d'atterrissage envoyé par le véhicule aérien sans pilote ;
la diffusion de l'emplacement du site d'atterrissage et de données de la plate-forme d'atterrissage intelligente au véhicule aérien sans pilote ;
le calcul, dans le véhicule aérien sans pilote, d'un angle d'arrivée et d'une distance jusqu'à la plate-forme d'atterrissage intelligente sur la base de l'emplacement et des données du site d'atterrissage ; et
l'initiation d'un processus de descente du véhicule aérien sans pilote vers la plate-forme d'atterrissage intelligente au cours duquel le véhicule aérien sans pilote capture des images de la plate-forme d'atterrissage intelligente, scanne des codes de réponse rapide (QR) (122) montrés sur la surface d'affichage, et commence un processus d'atterrissage à navigation basée sur des repères pour faire atterrir le véhicule aérien sans pilote sur la plate-forme d'atterrissage intelligente.

8. Procédé (300) selon la revendication 7, dans lequel le véhicule aérien sans pilote comprend une charge utile de capteur (242) configurée pour permettre au véhicule aérien sans pilote (240) de suivre la plate-forme d'atterrissage intelligente (100) et de communiquer avec celle-ci.

9. Procédé (300) selon la revendication 8, dans lequel la charge utile du capteur (242) comprend un ou plusieurs éléments parmi un dispositif de capture d'image, un capteur de télémétrie laser, un capteur de proximité, et un dispositif de télémétrie à longue portée (LoRa) et de temps de vol (ToF).

10. Procédé (300) selon la revendication 7, dans lequel un canal de communication de données propriétaires (239) diffuse l'emplacement du site d'atterrissage et des données de la plate-forme d'atterrissage intelligente (100) au véhicule aérien sans pilote (240).
